# EUROPEAN PATENT SPECIFICATION

(11) **EP 1 626 896 B1**
(45) Date of publication and mention of the grant of the patent: **28.07.2010**
(21) Application number: 04733856.1
(22) Date of filing: 19.05.2004
(51) Int. Cl.: B63H 11/08, B60F 3/00

(54) **A JET DRIVE FOR AN AMPHIBIOUS VEHICLE**
WASSERSTRAHLPUMPE FÜR EIN AMPHIBIENFAHRZEUG
MOTEUR A REACTION HYDRAULIQUE POUR VEHICULE AMPHIBIE

(30) Priority: 19.05.2003 GB 0311495
(43) Date of publication of application: 22.02.2006
(73) Proprietor: Gibbs Technologies Ltd., Warwickshire CV11 4LY (GB)
(72) Inventor: GIBBS, Alan Timothy, London SW11 4PL (GB); JENKINS, Neil Graham, Atherstone, Warwickshire CV9 1ED (GB)
(74) Representative: Pluckrose, Anthony William
(86) International application number: PCT/GB2004/002135
(87) International publication number: WO 2004/103810

(56) References cited:
- DE-A- 19 831 324
- FR-A- 1 356 637
- US-A- 5 649 843
- US-B1- 6 273 768

## Description

The present invention relates to a jet drive, and in particular to a jet drive for use in an amphibious vehicle.

Document FR 1356 637 discloses such a jet drive for use in an amphibious vehicle.

Jet drives are commonly employed in marine vessels as an alternative means of propulsion to shaft driven propellers, stern drives or outboard motors. A jet drive generates a propulsive thrust in a first direction as a result of a reaction force created upon forcing a jet of water in a second opposite direction.

Conventional jet drives have overall aspect ratios of at least 5:1, more typically 6:1; where the overall aspect ratio is calculated as the axial length of the fluid flow path through the jet drive divided by the mean diameter of the impeller. Such jet drives are designed to power marine vessels having smooth hulls from standing (i.e. fully displaced) up to speed, including speeds where sufficient hydrodynamic lift is generated due to speed through water that the hull rises up out of the water onto the plane. A conventional jet drive is designed for maximum thrust at high jet speeds to maximise the top speed achievable by the vessel. Furthermore, the aspect ratio of a conventional jet intake, calculated as its length over its width, varies from 1.9 to 3.3 or even more.

Whilst conventional jet drives have proved to be ideal propulsion means for dedicated marine vessels, they have not done so for amphibious vehicles. An amphibious vehicle presents quite unique problems and considerations both in terms of performance and packaging requirements. There is a need to optimise performance of the vehicle both in marine and land modes and to cater for the transition between marine and land modes and vice-versa. This presents conflicting requirements and it has been found that conventional jet drives are poorly suited to the requirements of an amphibious vehicle, it not being possible to optimise both on-water and on-land performance.

In the past, designers of amphibious vehicles have focussed their efforts on optimising either on-water or on-land performance. As a result, either on-water performance has been sacrificed in order to give satisfactory on-land performance, or on-land performance sacrificed to give satisfactory on-water performance.

Conversely, the present applicant has preferred to design an amphibious vehicle having optimised on-land and on-water performance. To this end, the applicant has gone against conventional thinking and overcome previous technical prejudices in arriving at the jet drive according to the present invention.

In particular, the applicant has found it desirable for the hull of an amphibious vehicle to have shallow deadrise angles (approximately 5 degrees) as compared to that of a conventional planing hull (10 to 25 degrees). This enables sufficient ground clearance when on land without compromising handling and performance of the vehicle in land mode by having to raise mechanical components and occupant seating to suit conventional deadrise angles. This would increase frontal area, and thus aerodynamic drag; and also raise the centre of gravity, thus increasing cornering roll and decreasing passenger comfort. The adoption of low dead rise angles is contrary to what has been previously accepted as being necessary for a planing marine hull.

Furthermore, the hull of an amphibious vehicle is not as smooth as that of a dedicated marine hull due to the need for wheel arch cut outs to accommodate retractable wheels. In the past, designers have expended great effort in providing complex moving cover mechanisms for such wheel arch cut outs to reestablish the smooth uninterrupted lines of a conventional marine hull when the wheels are retracted. This is done in order to minimise the through water drag of the hull, and to optimise on-water performance. The higher the drag coefficient of a hull, the more difficult it is for that hull to be a planing hull. Alternatively, in the past, one solution was to omit wheel arch cut outs completely. Instead, the road wheels were kept outboard of the hull in both the protracted or lowered (on-land), and the retracted or raised (on-water) condition. Indeed, in certain cases, road wheels are fixed in a lowered position both in land and marine modes. This arrangement also has consequences for both on-water and on-land performance due to the unusual weight distributions and increased wheel track dimension.

In the amphibious vehicle of the present applicant, however, wheel arch cut outs in the hull have been retained but optimised to minimise through water drag as far as possible, as described in the applicant's co-pending UK patent application no. 0311499.8 entitled 'A Hull For An Amphibious Vehicle'. No wheel arch covers are used. A net increase in the drag coefficient of the hull as compared to that of a dedicated marine hull has thus been accepted.

As such, the present applicant has been able to optimise on-land vehicle handling and performance at the expense of reduced dead rise angles and increased water drag of the hull. This route has challenged conventional thinking, but has resulted in an amphibious vehicle which can still achieve sufficient through water speed and hydrodynamic lift to get the vehicle up onto the plane. As such, on-water performance is not compromised. This has been achieved using a jet drive which provides enhanced thrust at low jet speeds, to overcome the increased drag and reduced dead rise angle, and so to power the amphibious vehicle up onto the plane. Conventional marine jet drives cannot provide this performance.

Furthermore, in order to obtain satisfactory on-water performance, and in particular to achieve satisfactory planing characteristics in an amphibious vehicle, it has been found that a mid- or rear-mounted engine is preferred, with driven rear wheels. This optimises weight distribution on water, and also helps optimise on-road performance. This arrangement presents packaging problems in terms of the amount of space available for a jet drive and for the power transmission thereto. Conventional marine jet drives cannot be accommodated satisfactorily in an amphibious vehicle when the engine is mid- or rear-mounted and the rear wheels are driven, because the rear axle differential heavily restricts the space available for the water jet intake. Again, the jet drive according to the present invention has been developed with an aspect ratio of less than 4:1, preferably less than 3.2:1, and yet beneficially achieves the low speed increased thrust requirements. The short intake used results in an intake length to width ratio less than 1.5, preferably less than 1.2; or even more preferably, less than 0.95. Thus, the jet drive can be packaged within tight confines, to the extent that there is no overhang of the jet drive beyond the rear transom of the vehicle. This is important from several aspects. Firstly, it prevents a sharp object such as a steering nozzle or reversing bucket protruding beyond the bodywork of the vehicle, where they can suffer damage through grounding, backing into kerbs, etc. Secondly, it enables rear end crash protection to be improved, as there is clearance between the jet drive intake duct and the differential housing, allowing controlled displacement of the jet drive in an impact.

Another advantage of enhanced jet thrust at low engine speed is found when leaving or entering water. It is helpful, for example, to have good jet thrust available when landing on a slipway, to increase grip at the driven road wheels; particularly as marine drag is increased at this stage due to the road wheels being in their protracted positions. Furthermore, marine steering is more effective as more thrust is available; steering control when leaving water being of course more crucial than in open water. If rear wheel drive is used, as is convenient and appropriate with a mid- or rear-mounted engine for good weight distribution for planing, the non-driven front wheels will hit the slipway first; so enhanced low-speed jet thrust is particularly helpful until the rear wheels touch ground. It is also clearly essential for marine drive to remain engaged until road wheel drive is fully effective; so the rotating speeds of these two systems must be compatible.

In order to provide enhanced thrust at low jet speeds, it is necessary to use a relatively large diameter impeller. Once this decision has been taken, two further benefits in particular flow from the unconventional proportions used.

First, the relatively large difference between the impeller housing diameter and the impeller hub diameter allows improvements in energy efficiency, corresponding to those found in high bypass ratio aircraft jet engines. This is due to three factors: one is the reduced influence of boundary layers, because a smaller proportion of the water flow loses energy through frictional contact with housing and hub. The second is lower frictional losses due to lower mean water velocity; and the third is that the kinetic energy input (one half of mass times velocity squared) falls faster than the momentum output (mass times velocity) at the necessarily reduced rotating speeds.

The second initially unexpected advantage of a large diameter jet is in the area of cavitation - the formation of "bubbles" of vacuum which implode adjacent to the impeller blades as they are powered through the water. Such activity damages the blades by pulling chips of metal off their surfaces - an effect known as spalling - and creates unwelcome noise and a concomitant loss in efficiency.

The onset of cavitation is strongly related to blade tip speed; so a larger diameter jet must run slower. However, small impeller blades are also particularly liable to induce cavitation, due to the large pressure difference between their pressure surfaces and their suction surfaces. If the load is spread over a larger blade area, the difference in pressure can be reduced, leading to a lower likelihood of cavitation.

Prior art displacement amphibious vehicles having marine jet drives require increased jet speed for increased thrust, but also consequentially increase wheel speeds when passing from water to land. This led to difficulties in obtaining grip when the wheels touch ground; and wastage of power before grounding by churning up water around spinning wheels. It is clear that if adequate jet thrust for effective marine to land conversion is available at a jet speed of say, 1000 rpm, rather than a typical 2500 rpm required by prior art jet drives, a much lower wheel speed will result than with a prior art jet drive, if the road transmission is driven at the same speed as the marine transmission. To express this conversely, once the road wheel transmission is engaged, the rotation of the wheels in the water will increase the load on the whole power train; thus limiting the attainable engine speed. Hence the jet speed is automatically reduced, and good jet thrust is essential.

The present invention thus addresses the limitations of prior art jet drives and provides a jet drive having particular utility in amphibious vehicle applications.

The present invention provides, in a first aspect, a jet drive for an amphibious vehicle comprising:
a fluid inlet;
a fluid outlet;
a conduit extending from the fluid inlet to the fluid outlet and defining a fluid flow path therebetween; and
a rotatable impeller housed within the conduit between the fluid inlet and fluid outlet, characterized in that:
   the ratio of the axial length of the conduit to the diameter of the impeller is less than 4.0.

Preferred embodiments of the present invention will now be described by way of example only with reference to the accompanying drawings, in which:
Figure 1 is a perspective view of a jet drive and powertrain for an amphibious vehicle in accordance with a first preferred embodiment of the present invention;
Figure 2 is a schematic sectional view from one side of the jet drive of Figure 1;
Figure 3 is a plan view from underneath of the jet drive intake, on line A-A' in Figure 2; and
Figure 4 is a schematic illustration of the jet drive and powertrain of Figure 1 packaged in an amphibious vehicle.

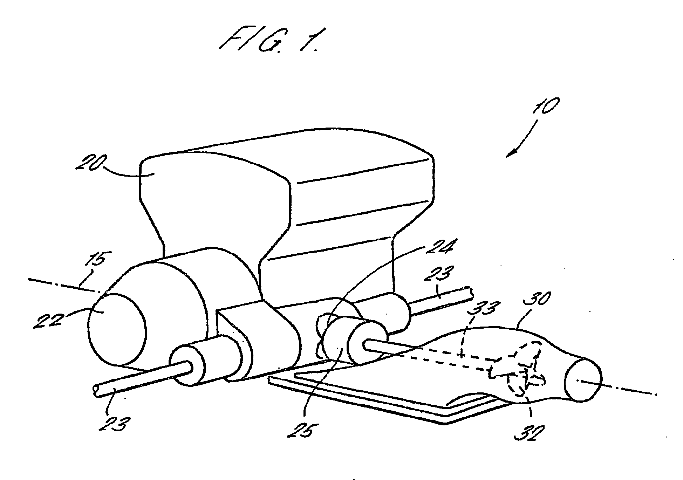

Referring first to Figure 1, there is shown a jet drive and powertrain arrangement 10 comprising a jet drive 30 and an internal combustion engine 20. A transmission 22 transfers drive from the internal combustion engine 20 to two wheel driveshafts 23 and to a power take off shaft 24. A decoupler 25 is optionally provided for selectively engaging the power take off shaft 24 with a drive shaft 33 of the jet drive 30. Numeral 15 denotes a central longitudinal axis of the vehicle. It is conventional, but not essential, to locate the axis of jet impeller 32 on such an axis.

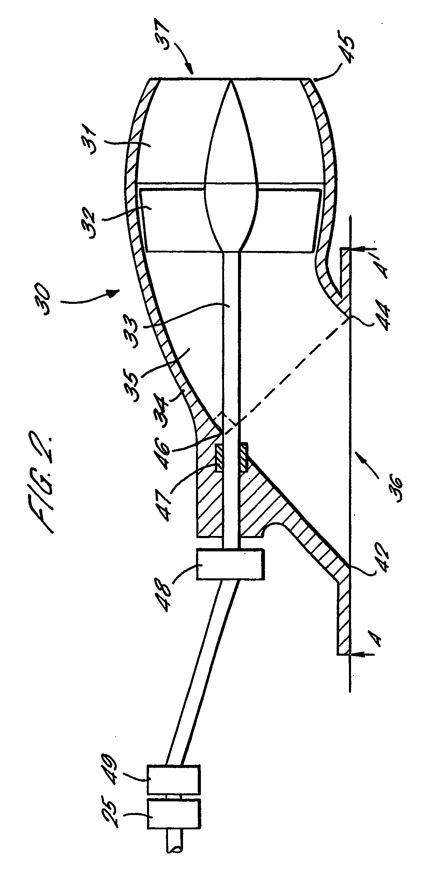

In Figure 2, the jet drive 30 can be seen to comprise a housing 34 which defines a conduit 35 in which a rotatable impeller 32 is housed. The housing 34 defines a fluid inlet 36 located upstream of the impeller 32, a fluid outlet 37 located downstream of the impeller 32, and a fluid flow path therebetween. The fluid inlet 36 may be provided with a screen filter (not shown) to prevent the ingress of unwanted bodies into the fluid flow path of the jet drive 30. The fluid outlet 37 acts as a discharge nozzle for the exiting fluid jet. A first end of the drive shaft 33 passes through a wall of the housing 34 into conduit 35 and is supported by a bearing 47. The drive shaft 33 extends inside the conduit 35 and the impeller 32 is mounted on a second distal end of the drive shaft 33. The drive shaft 33 acts as a cantilever, the drive shaft 33 and impeller 32 being cantilevered from the housing wall via bearing 47.

It should be noted that not only are some impellers tapered from front to rear, as shown; but also that some impeller blades have complex swept forms or curved edges. For the avoidance of doubt as to how to measure the impeller diameter, all ratios expressed within this specification which relate to the impeller diameter have been calculated in terms of the more easily defined mean internal diameter of the impeller housing (i.e. mean conduit diameter); which should of course be measured in the housing area surrounding the blades. Where the impeller and housing are tapered longitudinally, on a straight or curved taper, the mean diameter of the impeller housing in the area swept by the blades should be used for all calculations relating thereto.

A stator 31 may optionally be provided in the fluid flow path between the impeller 32 and the fluid outlet 37. The stator 31 is provided with stator vanes which are arranged so as to remove the rotational elements of the fluid flow exiting the impeller 32, thus presenting a uniform inline jet of fluid at the fluid outlet 37. A duct liner (not shown) may be fitted around impeller 32, to protect the jet housing against abrasion. Its inside diameter would of course be considered as the effective internal diameter of the jet impeller housing 34 (i.e. the impeller diameter).

The dimensions of the jet drive 30 are important in terms of performance and packaging within an amphibious vehicle, as will now be described. The axial length of the fluid flow conduit is measured along the vehicle from point 42 at the front of intake 36 to point 45 at outlet 37. This dimension is preferably between 0.3m and 2.0m; more preferably between 0.7m and 1.0m; and in a particularly preferred embodiment, substantially equal to 0.85m.

The mean impeller housing internal diameter is measured around the outside of the blades, and is preferably between 0.1m and 0.66m; more preferably between 0.25m and 0.33m; and in a particularly preferred embodiment is substantially 0.30m.

The ratio between the axial length of the conduit to the mean impeller housing internal diameter is preferably less than 4.0; more preferably less than 3.2; and in a particularly preferred embodiment is substantially 2.9.

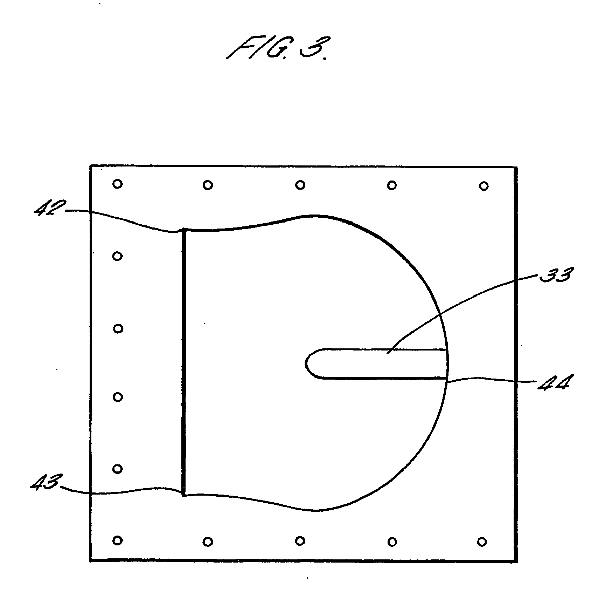

The width of the jet intake is measured between points 42 and 43 in Figure 3, as compared to the jet intake length, which is measured between point 42 and cutwater 44 in Figure 2. The ratio of intake length to width is preferably between 0.4 and 1.5; more preferably between 0.7 and 1.2; and in a particularly preferred embodiment is substantially 0.95. The intake length may be substantially 0.41m.

It should be noted that in practice, both the front and rear of the jet intake may be of curved form in side view. Where the front of the intake is curved, point 42 may be taken as the point at which the intake diverges upwards from the flat plane of the hull adjacent to arrow A at the front of the intake. Alternatively, if the point at which the front of the intake curves upwards from the flat hull plane is unclear, a location of point 42 may be calculated by projecting a line from a steadily sloping section of the jet intake; or from a point of inflection therein; and measuring the intersection of this line with the flat plane of the hull. Similarly, cutwater 44 may be defined as the most forward point on a radius in vertical cross-section at the rearward end of the jet intake.

In order to improve the planing characteristics of the amphibious vehicle, a ride plate may be fixed below the jet intake area as described in the applicant's co-pending UK patent application no. 0311499.8 entitled 'A Hull For An Amphibious Vehicle'. Any reduction in jet intake area would be negated by the increase in the available planing area. The ride plate would conventionally be a pressing, fastened to or through the jet housing casting. Hence for the purposes of calculations of areas and ratios, a ride plate is regarded as an accessory to the jet assembly, whose ratios according to design remain unchanged.

The fluid inlet area of a water jet is conventionally measured on a plane from the cutwater at right angles to the fluid flow through the jet. This is shown in figure 2 as a dashed line joining cutwater 44 to point 46 on the housing. The outlet area is measured at outlet 37.

For the jet characteristics required for a planing amphibious vehicle, the ratio of fluid inlet area to fluid outlet area is preferably in the range 2.5 to 3.5; more preferably in the range 2.8 to 3.2; and in a particularly preferred embodiment is substantially 3.03.

Furthermore, the inlet area may preferably be between 0.020m² and 0.400m²; more preferably between 0.040m² and 0.150m²; and in a particularly preferred embodiment is substantially 0.081m². The corresponding outlet area may preferably be between 0.010m² and 0.150m²; more preferably between 0.020m² and 0.060m²; and in a particularly preferred embodiment is substantially 0.027m².

The flow rate through the jet drive may vary from zero -at rest- to 1.5m³s⁻¹ at maximum operating speed. In a particularly preferred embodiment, the flow rate is substantially 0.2m³s⁻¹ at an impeller speed of 600 rpm; and substantially 1.1m³s⁻¹ at an impeller speed of 3000 rpm.

The stator inlet diameter is substantially equal to the impeller outlet diameter, and is preferably between 0.11m and 0.66m; more preferably between 0.25m and 0.35m; and in a particularly preferred embodiment, is substantially 0.30m. The diameter of the nozzle at the jet output end may be substantially 0.185m.

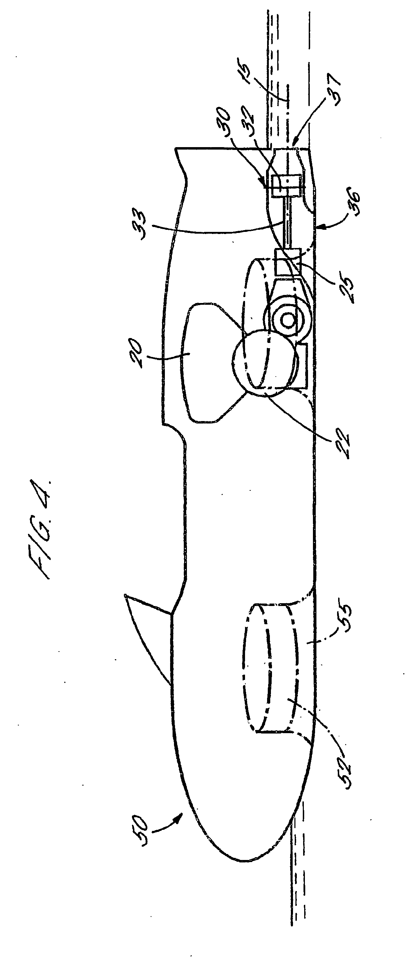

Packaging of the jet drive 30 and engine 20 in a vehicle 50 with retractable wheels 52 is illustrated in Figure 4.

Whilst in the preferred embodiment described the powertrain 20 has been described as comprising an internal combustion engine and mechanical transmission 22, it will be appreciated that any prime mover and power transmission system may be used to implement the jet drive according to the present invention. For example, the prime mover may be a spark ignition or compression ignition internal combustion engine, an electric motor, a fuel cell, a hybrid engine or any combination thereof. The transmission of power from the prime mover to the jet drive may be effected using any conventional means such as direct mechanical drive via drive shafts, manual or automatic transmission or continuously variable transmission. Alternatively, hydraulic or electric power transmission means may be implemented using hydraulic or electric pumps/generators and motors.

Furthermore, the prime mover may be mounted transversely as shown in the figures and as described in the applicant's co-pending application published as WO 02/07999; or longitudinally, as is found convenient. An example of a power train comprising a longitudinally mounted prime mover may be found in the applicant's co-pending application published as WO 02/12005.

Drive shaft 33 may conveniently be mounted substantially parallel to the vehicle longitudinal axis 15, as is shown in the figures. However, this layout may result in significant transmission damage if the vehicle is struck from behind in an accident. It may therefore be preferable to introduce a lateral and/or vertical angle to the vehicle longitudinal axis in the mounting of the drive shaft 33 in the vehicle. This encourages the jet drive assembly to move laterally and/or vertically under rear impact conditions. In this case, one or more universal joints ("UJ's"); or preferably constant velocity ("CV") joints; may be fitted to at least one end of the drive shaft, preferably adjacent to decoupler 25 and/or adjacent to the jet intake housing, to ensure smooth running. A suitable rearward joint position is shown at 48 in figure 2. Alternatively, a joint and bearing may be provided just forward of the impeller. This has the advantage of providing improved support for the impeller, but obstructs water flow through the intake duct; and must have highly effective sealing against water ingress.

Such a skewed drive shaft may also accommodate the effects on the marine drive shaft of driveline shunt where a transverse engine is fitted. Driveline shunt is caused by a transverse engine rocking backwards and forwards on its mountings as power is applied and removed, and could be damaging to a substantially longitudinal drive shaft. Finally, as is known in the automotive engineering art, two universal joints could be fitted at opposite ends of the shaft; but ninety degrees out of phase with each other in a rotational sense, to dampen out transmission vibrations.

To allow the amphibious vehicle to brake or to travel in reverse on water, there are two possible solutions. One is to provide a reversing bucket downstream of the jet fluid outlet, as is known in the marine jet drive art. Reversing buckets provide efficient and controllable reverse drive, but are unsightly on a road vehicle. Where the jet is driven through the road wheel transmission, the alternative is to use the transmission reverse gear to drive the impeller in an opposite direction to that required for forward motion of the vehicle to effect a braking or a reversing function.

As an example of the efficient performance of the jet drive described above, it has been found that an amphibious vehicle travelling over water at a speed of 8.7 knots (4.5ms⁻¹) at a trim angle between ten and fifteen degrees, will rise onto the plane despite having a through water drag co-efficient greater than 0.27 under these conditions.

Furthermore, a jet drive according to the construction described above has been found to generate a peak bollard pull of at least 7.7kN from an engine peak power of less than 135kW, within a jet overall length of less than 860mm. Indeed, the bollard pull thrust may be as high as 7.85kN.

## Claims

1. A jet drive (30) for an amphibious vehicle (50) comprising:
a fluid inlet (36);
a fluid outlet (37);
a conduit (35) extending from the fluid inlet to the fluid outlet and defining a fluid low path therebetween; and
a rotatable impeller (32) housed within the conduit (35) between the fluid inlet (36) and fluid outlet (37), **characterized in that**:
the ratio of thrust to intake length of the jet drive is at least 18,000 Newtons per metre.

2. A jet drive as claimed in claim 1 wherein the ratio of the thrust to the overall length of the jet drive is at least 8,000 Newtons per metre.

3. A jet drive as claimed in claim 1 or claim 2 wherein the ratio of the overall length of the jet drive to the intake length is between 2.01 and 2.11.

4. A jet drive as claimed in any one of the preceding claims wherein the ratio of the jet overall length to the engine power is less than 7 millimetres per kilowatt.

5. A jet drive as claimed in any one of the preceding claims wherein the ratio of the thrust to the impeller diameter is at least 25000 Newtons per metre.

6. A jet drive as claimed in any one of the preceding claims wherein the ratio of the jet nozzle diameter to the engine power is at least 1.3 millimetres per kilowatt.

7. A jet drive as claimed in any one of the preceding claims wherein the ratio of the jet nozzle diameter to the impeller diameter is at least 0.6.

8. A jet drive as claimed in any one of the preceding claims wherein the ratio of the jet nozzle diameter to the overall length of the jet drive is at least 0.21.

9. A jet drive as claimed in any one of the preceding claims wherein the ratio of fluid inlet area to fluid outlet area is in the range 2.5 to 3.5.

10. A jet drive as claimed in any one of the preceding claims wherein the ratio of fluid inlet area to fluid outlet area is in the range 2.8 to 3.2.

11. A jet drive as claimed in any one of the preceding claims wherein the ratio of fluid inlet area to fluid outlet area is substantially 3.03.

12. A jet drive as claimed in any one of the preceding claims wherein the fluid inlet area is in the range 0.020m² to 0.400m², and the fluid outlet area is in the range 0.010m² to 0.150m².

13. A jet drive as claimed in any one of the preceding claims wherein the fluid inlet area is in the range 0.040m² to 0.150m², and the fluid outlet area is in the range 0.020m² to 0.060m².

14. A jet drive as claimed in any one of the preceding claims wherein the fluid inlet area is substantially 0.081m², and the fluid outlet area is substantially 0.027m².

15. A jet drive as claimed in any one of the preceding claims wherein the rate of fluid flow through the jet drive is in the range 0m³s⁻¹ to 1.5m³s⁻¹.

16. A jet drive as claimed in any one of the preceding claims wherein the rate of fluid flow through the jet drive varies from substantially 0.2m ³s⁻¹when the impeller is driven at 600rpm to substantially 1.1m³s⁻¹ when the impeller is driven at 3000rpm.

17. A jet drive as claimed in any one of the preceding claims further comprising a stator (31) housed within the conduit between the impeller and the fluid outlet.

18. A jet drive as claimed in claim 17 wherein the stator has an inlet diameter in the range of 0.11m to 0.66m.

19. A jet drive as claimed in claim 17 or claim 18 wherein the stator has an inlet diameter in the range of 0.25m to 0.35m.

20. A jet drive as claimed in any one of claims 17 to 19 wherein the stator has an inlet diameter of substantially 0.305m.

21. An amphibious vehicle comprising a jet drive as claimed in any of the preceding claims wherein the ratio of thrust to engine power is at least 0.05 Newtons per Watt.

22. An amphibious vehicle comprising a jet drive as claimed in any one of claims 1 to 20 or an amphibious vehicle as claimed in claim 21 wherein the jet drive generates a peak bollard pull of at least 7kN from an engine peak power of less than 135kW, within a jet overall length of less than 860mm.

23. An amphibious vehicle as claimed in claim 22 wherein the peak bollard pull is at least 7.7kN.

24. An amphibious vehicle comprising a jet drive as claimed in any one of claims 1 to 20 or an amphibious vehicle as claimed in any one of claims 21 to 23 wherein the impeller can be driven in an opposite direction to that required for forward motion of the vehicle to effect a braking or a reversing function.

25. An amphibious vehicle comprising a jet drive as claimed in any one of claims 1 to 20 or an amphibious vehicle as claimed in any one of claims 21 to 24 further comprising a drive shaft (33) linking a power take off shaft (24) of an engine to a jet input of the jet drive, wherein the drive shaft is skewed horizontally and/or vertically relative to the longitudinal axis of the vehicle.

26. An amphibious vehicle as claimed in claim 25 further comprising at least one universal joint affixed to the drive shaft (33).

27. An amphibious vehicle as claimed in claim 25 or claim 26 further comprising at least one constant velocity joint affixed to the drive shaft.

28. An amphibious vehicle comprising a jet drive as claimed in any one of claims 1 to 20 or an amphibious vehicle as claimed in any one of claims 21 to 27 wherein the jet drive is fully contained within the amphibious vehicle such that no part of the jet drive extends out of the vehicle.

29. A jet drive (30) for an amphibious vehicle (50) comprising:
a fluid inlet (36);
a fluid outlet (37);
a conduit (35) extending from the fluid inlet to the fluid outlet and defining a fluid flow path therebetween; and
a rotatable impeller (32) housed within an impeller housing in the conduit between the fluid inlet (36) and fluid outlet (37), **characterized in that**:
the ratio of the axial length of the conduit to the mean internal diameter of the impeller housing is less than 4.0.

30. A jet drive as claimed in claim 29 wherein the ratio of the axial length of the conduit to the mean internal diameter of the impeller housing is less than 3.2.

31. A jet drive as claimed in claim 29 or claim 30 wherein the ratio of the axial length of the conduit to the mean internal diameter of the impeller housing is substantially 2.9.

32. A jet drive as claimed in any one of claims 29 to 31 wherein the axial length of the conduit is in the range 0.3m to 2.0m, and the mean internal diameter of the impeller housing is in the range 0.1m to 0.66m.

33. A jet drive as claimed in any one of claims 29 to 32 wherein the axial length of the conduit is in the range 0.7m to 1.0m and the mean internal diameter of the impeller housing is in the range 0.25m to 0.33m.

34. A jet drive as claimed in any one of claims 29 to 33 wherein the axial length of the conduit is substantially 0.85m and the mean internal diameter of the impeller housing is substantially 0.295m.

35. Use of a jet drive as claimed in any one of claims 1 to 20 or claims 29 to 34 to propel an amphibious vehicle operating in marine mode.

36. Use of a jet drive as claimed in any one of claims 1 to 20 or claims 29 to 34 to propel an amphibious vehicle operating in marine mode to a speed where sufficient hydrodynamic lift is achieved for the vehicle to plane.

37. Use of a jet drive as claimed in any one of claims 1 to 20 or claims 29 to 34 to propel an amphibious vehicle having a through water drag co-efficient greater than 0.27 at a speed of 8.7 knots (4.5ms⁻¹) and a trim angle between ten and fifteen degrees, the jet drive propelling the vehicle when operating in marine mode to a speed where sufficient hydrodynamic lift is achieved for the vehicle to plane.

38. An amphibious vehicle incorporating the jet drive as claimed in any one of claims 1 to 20 or claims 29 to 34.

## Patentansprüche

1. Strahlantrieb (30) für ein Amphibienfahrzeug (50) umfassend:
einen Fluideinlass (36);
einen Fluidauslass (37);
eine Leitung (35), die sich von dem Fluideinlass zu dem Fluidauslass erstreckt und dazwischen einen Fluidströmungsweg definiert; und
ein drehbares Laufrad (32), das in der Leitung (35) zwischen dem Fluideinlass (36) und dem Fluidauslass (37) aufgenommen ist,
**dadurch gekennzeichnet,**
**dass** das Verhältnis von Schub zu Einlasslänge des Strahlantriebs wenigstens 18000 Newton pro Meter beträgt.

2. Strahlantrieb nach Anspruch 1,
wobei das Verhältnis des Schubs zur Gesamtlänge des Strahlantriebs wenigstens 8000 Newton pro Meter beträgt.

3. Strahlantrieb nach Anspruch 1 oder Anspruch 2;
wobei das Verhältnis der Gesamtlänge des Strahlantriebs zur Einlasslänge zwischen 2,01 und 2,11 liegt.

4. Strahlantrieb nach einem der vorhergehenden Ansprüche,
wobei das Verhältnis der Gesamtlänge des Strahls zur Motorleistung weniger als 7 Millimeter pro Kilowatt beträgt.

5. Strahlantrieb nach einem der vorhergehenden Ansprüche,
wobei das Verhältnis des Schubs zum Durchmesser des Laufrades wenigstens 25000 Newton pro Meter beträgt.

6. Strahlantrieb nach einem der vorhergehenden Ansprüche,
wobei das Verhältnis des Durchmessers der Strahldüse zur Motorleistung wenigstens 1,3 Millimeter pro Kilowatt beträgt.

7. Strahlantrieb nach einem der vorhergehenden Ansprüche,
wobei das Verhältnis des Durchmessers der Strahldüse zum Durchmesser des Laufrades wenigstens 0,6 beträgt.

8. Strahlantrieb nach einem der vorhergehenden Ansprüche,
wobei das Verhältnis des Durchmessers der Strahldüse zur Gesamtlänge des Strahlantriebs wenigstens 0,21 beträgt.

9. Strahlantrieb nach einem der vorhergehenden Ansprüche,
wobei das Verhältnis des Fluideinlassbereiches zum Fluidauslassbereich im Bereich von 2,5 bis 3,5 liegt.

10. Strahlantrieb nach einem der vorhergehenden Ansprüche,
wobei das Verhältnis des Fluideinlassbereiches zum Fluidauslassbereich im Bereich von 2,8 bits 3,2 liegt.

11. Strahlantrieb nach einem der vorhergehenden Ansprüche,
wobei das Verhältnis des Fluideinlassbereiches zum Fluidauslassbereich im Wesentlichen 3,03 beträgt.

12. Strahlantrieb nach einem der vorhergehenden Ansprüche,
wobei der Fluideinlassbereich im Bereich von 0,020m² bis 0,400m² liegt, und der Fluidauslassbereich im Bereich von 0,01 0m² bis 0, 150m² liegt.

13. Strahlantrieb nach einem der vorhergehenden Ansprüche,
wobei der Fluideinlassbereich im Bereich von 0,040m² bis 0,150m² liegt, und der Fluidauslassbereich im Bereich von 0,020m² bis 0,060m² liegt.

14. Strahlantrieb nach einem der vorhergehenden Ansprüche,
wobei der Fluideinlassbereich im Wesentlichen 0,081 m² beträgt, und der Fluidaüslassbereich im Wesentlichen 0,027m² beträgt.

15. Strahlantrieb nach einem der vorhergehenden Ansprüche,
wobei die Fluidströmungsrate durch den Strahlantrieb im Bereich von 0m³s⁻¹ bis 1,5m³s⁻¹ liegt.

16. Strahlantrieb nach einem der vorhergehenden Ansprüche,
wobei die Fluidströmungsrate durch den Strahlantrieb von im Wesentlichen 0,2m³s⁻¹, wenn das Laufrad bei 600rpm angetrieben wird, bis zu im Wesentlichen 1,1m³s⁻¹, wenn das Laufrad bei 3000rpm angetrieben wird, variiert.

17. Strahlantrieb nach einem der vorhergehenden Ansprüche,
ferner umfassend einen Stator (31), der innerhalb der Leitung zwischen dem Laufrad und dem Fluidauslass aufgenommen ist.

18. Strahlantrieb nach Anspruch 17,
wobei der Stator einen Einlassdurchmesser im Bereich von 0,11m bis 0,66m aufweist.

19. Strahlantrieb nach Anspruch 17 oder Anspruch 18,
wobei der Stator einen Einlassdurchmesser im Bereich von 0,25m bis 0,35m aufweist.

20. Strahlantrieb nach einem der Ansprüche 17 bis 19,
wobei der Stator einen Einlassdurchmesser von im Wesentlichen 0,305m aufweist.

21. Amphibienfahrzeug umfassend einen Strahlantrieb nach einem der vorhergehenden Ansprüche,
wobei das Verhältnis des Schubs zur Motorleistung wenigstens 0,05 Newton pro Watt beträgt.

22. Amphibienfahrzeug umfassend einen Strahlantrieb nach einem der Ansprüche 1 bis 20 oder Amphibienfahrzeug nach Anspruch 21,
wobei der Strahlantrieb einen höchsten Pfahlzug von wenigstens 7kN aus einer Motorhöchstleistung von weniger als 135kW innerhalb einer Strahlgesamtlänge von weniger als 860mm erzeugt.

23. Amphibienfahrzeug nach Anspruch 22,
wobei der höchste Pfahlzug wenigstens 7,7kN beträgt.

24. Amphibienfahrzeug umfassend einen Strahlantrieb nach einem der Ansprüche 1 bis 20 oder Amphibienfahrzeug nach einem der Ansprüche 21 bis 23,
wobei das Laufrad in einer Richtung angetrieben werden kann, die derjenigen, die für eine Forwärtsbewegung des Fahrzeugs nötig ist, entgegengesetzt ist, um eine Brems- oder eine Umkehrfunktion auszuführen.

25. Amphibienfahrzeug umfassend einen Strahlantrieb nach einem der Ansprüche 1 bis 20 oder Amphibienfahrzeug nach einem der Ansprüche 21 bis 24, ferner umfassend
eine Antriebswelle (33), die eine Zapfwelle (24) eines Motors mit einem Strahleinlass des Strahlantriebs verbindet,
wobei die Antriebswelle horizontal oder/und vertikal relativ zur Längsachse des Fahrzeugs abgeschrägt ist.

26. Amphibienfahrzeug nach Anspruch 25,
ferner umfassend wenigstens ein Universalgelenk, das an der Antriebswelle (33) befestigt ist.

27. Amphibienfahrzeug nach Anspruch 25 oder Anspruch 26,
ferner umfassend wenigstens ein Gleichlaufgelenk, das an der Antriebswelle befestigt ist.

28. Amphibienfahrzeug umfassend einen Strahlantrieb nach einem der Ansprüche 1 bis 20 oder Amphibienfahrzeug nach einem der Ansprüche 21 bis 27,
wobei der Strahlantrieb völlig innerhalb des Amphibienfahrzeugs enthalten ist, derart dass sich kein Teil des Strahlantriebs aus dem Fahrzeug heraus erstreckt.

29. Strahlantrieb (30) für ein Amphibienfahrzeug (50) umfassend:
einen Fluideinlass (36);
einen Fluidauslass (37);
eine Leitung (35), die sich von dem Fluideinlass zu dem Fluidauslass erstreckt und dazwischen einen Fluidströmungsweg definiert; und
ein drehbares Laufrad (32), das innerhalb eines Laufradgehäuses in der Leitung zwischen dem Fluideinlass (36) und dem Fluidauslass (37) aufgenommen ist,
**dadurch gekennzeichnet,**
**dass** das Verhältnis der axialen Länge der Leitung zum mittleren Innendurchmesser des Laufradgehäuses weniger als 4,0 beträgt.

30. Strahlantrieb nach Anspruch 29,
wobei das Verhältnis der axialen Länge der Leitung zum mittleren Innendurchmesser des Laufradgehäuses weniger als 3,2 beträgt.

31. Strahlantrieb nach Anspruch 29 oder Anspruch 30,
wobei das Verhältnis der axialen Länge der Leitung zum mittleren Innendurchmesser des Laufradgehäuses im Wesentlichen 2,9 beträgt.

32. Strahlantrieb nach einem der Ansprüche 29 bis 31,
wobei die axiale Länge der Leitung im Bereich von 0,3m bis 2,0 liegt, und der mittlere Innendurchmesser des Laufradgehäuses im Bereich von 0,1m bis 0,66m liegt.

33. Strahlantrieb nach einem der Ansprüche 29 bis 32,
wobei die axiale Länge der Leitung im Bereich von 0,7m bis 1,0m liegt, und der mittlere Innendurchmesser des Laufradgehäuses im Bereich von 0,25m bis 0,33m liegt.

34. Strahlantrieb nach einem der Ansprüche 29 bis 33,
wobei die axiale Länge der Leitung im Wesentlichen 0,85m beträgt, und der mittlere Innendurchmesser des Laufradgehäuses im Wesentlichen 0,295m beträgt.

35. Verwendung eines Strahlantriebs nach einem der Ansprüche 1 bis 20 oder Ansprüche 29 bis 34, um ein im Marine-Modus betriebenes Amphibienfahrzeug anzutreiben.

36. Verwendung eines Strahlantriebs nach einem der Ansprüche 1 bis 20 oder Ansprüche 29 bis 34, um ein im Marine-Modus betriebenes Amphibienfahrzeug auf eine Geschwindigkeit anzutreiben, bei der genügend hydrodynamischer Auftrieb erreicht wird, damit das Fahrzeug gleitet.

37. Verwendung eines Strahlantriebs nach einem der Ansprüche 1 bis 20 oder Ansprüche 29 bis 34, um ein Amphibienfahrzeug anzutreiben, welches einen Wasserwiderstandskoeffizienten größer als 0,27 bei einer Geschwindigkeit von 8,7 Knoten (4,5ms⁻¹) und einen Trimmwinkel zwischen zehn und fünfzehn Grad aufweist,
wobei der Strahlantrieb das Fahrzeug, wenn es im Marine-Modus betrieben wird, auf eine Geschwindigkeit antreibt, bei der genügend hydrodynamischer Auftrieb erreicht wird, damit das Fahrzeug gleitet.

38. Amphibienfahrzeug umfassend den Strahlantrieb nach einem der Ansprüche 1 bis 20 oder Ansprüche 29 bis 34.

## Revendications

1. Moteur à réaction hydraulique (30) pour un véhicule amphibie (50) comprenant :
un orifice d'arrivée de fluide (36) ;
un orifice de sortie de fluide (37) ;
une canalisation (35) s'étendant de l'orifice d'arrivée de fluide jusqu'à l'orifice de sortie de fluide et définissant un chemin d'écoulement de fluide entre eux ; et
une turbine rotative (32) logée dans la canalisation (35) entre l'orifice d'arrivée de fluide (36) et l'orifice de sortie de fluide (37), **caractérisé en ce que** :
le rapport poussée sur longueur d'admission du moteur à réaction hydraulique est d'au moins 18000 Newtons par mètre.

2. Moteur à réaction hydraulique tel que revendiqué dans la revendication 1 dans lequel le rapport de la poussée sur la longueur hors-tout du moteur à réaction hydraulique est d'au moins 8000 Newtons par mètre.

3. Moteur à réaction hydraulique tel que revendiqué dans la revendication 1 ou la revendication 2 dans lequel le rapport de la longueur hors-tout du moteur à réaction hydraulique sur la longueur d'admission se trouve entre 2,01 et 2,11.

4. Moteur à réaction hydraulique tel que revendiqué dans l'une quelconque des revendications précédentes dans lequel le rapport de la longueur hors-tout de jet sur la puissance du moteur est inférieur à 7 millimètres par kilowatt.

5. Moteur à réaction hydraulique tel que revendiqué dans l'une quelconque des revendications précédentes dans lequel le rapport de la poussée sur le diamètre de la turbine est d'au moins 25000 Newtons par mètre.

6. Moteur à réaction hydraulique tel que revendiqué dans l'une quelconque des revendications précédentes dans lequel le rapport du diamètre de tuyère d'éjection sur la puissance du moteur est d'au moins 1,3 millimètres par kilowatt.

7. Moteur à réaction hydraulique tel que revendiqué dans l'une quelconque des revendications précédentes dans lequel le rapport du diamètre de tuyère d'éjection sur le diamètre de la turbine est d'au moins 0,6.

8. Moteur à réaction hydraulique tel que revendiqué dans l'une quelconque des revendications précédentes dans lequel le rapport du diamètre de tuyère d'éjection sur la longueur hors-tout du moteur à réaction hydraulique est d'au moins 0,21.

9. Moteur à réaction hydraulique tel que revendiqué dans l'une quelconque des revendications précédentes dans lequel le rapport de la surface de l'orifice d'arrivée de fluide sur la surface de l'orifice de sortie dé fluide se trouve dans la plage de 2,5 à 3,5.

10. Moteur à réaction hydraulique tel que revendiqué dans l'une quelconque des revendications précédentes dans lequel le rapport de la surface de l'orifice d'arrivée de fluide sur la surface de l'orifice de sortie de fluide se trouve dans la plage de 2,8 à 3,2.

11. Moteur à réaction hydraulique tel que revendiqué dans l'une quelconque des revendications précédentes dans lequel le rapport de surface de l'orifice d'arrivée de fluide sur la surface de l'orifice de sortie de fluide est essentiellement de 3,03.

12. Moteur à réaction hydraulique tel que revendiqué dans l'une quelconque des revendications précédentes dans lequel la surface de l'orifice d'arrivée de fluide se trouve dans la plage de 0,020 m² à 0,400 m², et la surface de l'orifice de sortie de fluide se trouve dans la plage de 0,010 m² à 0,150 m².

13. Moteur à réaction hydraulique tel que revendiqué dans l'une quelconque des revendications précédentes dans lequel la surface de l'orifice d'arrivée de fluide se trouve dans la plage de 0,040 m² à 0, 150 m², et la surface de l'orifice de sortie de fluide se trouve dans la plage de 0,020 m² à 0,060 m².

14. Moteur à réaction hydraulique tel que revendiqué dans l'une quelconque des revendications précédentes dans lequel la surface de l'orifice d'arrivée de fluide est essentiellement de 0,081 m², et la surface de l'orifice de sortie de fluide est essentiellement de 0,027 m².

15. Moteur à réaction hydraulique tel que revendiqué dans l'une quelconque des revendications précédentes dans lequel le débit de fluide à travers le moteur à réaction hydraulique se trouve dans la plage de 0 m³s⁻¹ à 1,5 m³s⁻¹.

16. Moteur à réaction hydraulique tel que revendiqué dans l'une quelconque des revendications précédentes dans lequel le débit de fluide à travers le moteur à réaction hydraulique varie d'essentiellement 0,2 m³s⁻¹ lorsque la turbine est entraînée à 600 rpm à essentiellement 1, 1 m³s⁻¹ lorsque la turbine est entraînée à 3000 rpm.

17. Moteur à réaction hydraulique tel que revendiqué dans l'une quelconque des revendications précédentes comprenant en outre un stator (31) logé à l'intérieur de la canalisation entre la turbine et l'orifice de sortie de fluide.

18. Moteur à réaction hydraulique tel que revendiqué dans la revendication 17 dans lequel le stator a un diamètre d'orifice d'arrivée dans la plage de 0,11 m à 0,66 m.

19. Moteur à réaction hydraulique tel que revendiqué dans la revendication 17 ou la revendication 18 dans lequel le stator a un diamètre d'orifice d'arrivée dans la plage de 0,25 m à 0,35 m.

20. Moteur à réaction hydraulique tel que revendiqué dans l'une quelconque des revendications 17 à 19 dans lequel le stator a un diamètre d'orifice d'arrivée d'essentiellement 0,305 m.

21. Véhicule amphibie comprenant un moteur à réaction hydraulique tel que revendiqué dans l'une quelconque des revendications précédentes dans lequel le rapport de poussée sur la puissance du moteur est d'au moins 0,05 Newtons par Watt.

22. Véhicule amphibie comprenant un moteur à réaction hydraulique tel que revendiqué dans l'une quelconque des revendications 1 à 20 ou un véhicule amphibie tel que revendiqué dans la revendication 21 dans lequel le moteur à réaction hydraulique génère une capacité de traction en pointe d'au moins 7 kN à partir d'une puissance de pointe du moteur de moins de 135 kW, dans une longueur hors-tout de jet inférieure à 860 mm.

23. Véhicule amphibie tel que revendiqué dans la revendication 22 dans lequel la capacité de traction en pointe est d'au moins 7,7 kN.

24. Véhicule amphibie comprenant un moteur à réaction hydraulique tel que revendiqué dans l'une quelconque des revendications 1 à 20 ou un véhicule amphibie tel que revendiqué dans l'une quelconque des revendications 21 à 23 dans lequel la turbine peut être entraînée dans une direction opposée à celle nécessaire pour un mouvement de marche avant du véhicule pour exécuter un freinage ou une fonction de renversement de marche.

25. Véhicule amphibie comprenant un moteur à réaction hydraulique tel que revendiqué dans l'une quelconque des revendications 1 à 20 ou un véhicule amphibie tel que revendiqué dans l'une quelconque des revendications 21 à 24 comprenant en outre un arbre moteur (33) mettant en liaison un arbre de prise de puissance (24) d'un moteur à une entrée de jet du moteur à réaction hydraulique, dans lequel l'arbre moteur est incliné horizontalement et/ou verticalement par rapport à l'axe longitudinal du véhicule.

26. Véhicule amphibie tel que revendiqué dans la revendication 25 comprenant en outre au moins un cardan attaché à l'arbre moteur (33).

27. Véhicule amphibie tel que revendiqué dans la revendication 25 ou la revendication 26 comprenant en outre au moins un joint à vélocité constante attaché à l'arbre moteur.

28. Véhicule amphibie comprenant un moteur à réaction hydraulique tel que revendiqué dans l'une quelconque des revendications 1 à 20 ou un véhicule amphibie tel que revendiqué dans l'une quelconque des revendications 21 à 27 dans lequel le moteur à réaction hydraulique est contenu dans sa totalité à l'intérieur du véhicule amphibie de sorte qu'aucune partie du moteur à réaction hydraulique ne dépasse du véhicule.

29. Moteur à réaction hydraulique (30) pour un véhicule amphibie (50) comprenant :
un orifice d'arrivée de fluide (36) ;
un orifice de sortie de fluide (37) ;
une canalisation (35) s'étendant de l'orifice d'arrivée de fluide jusqu'à l'orifice de sortie de fluide et définissant un chemin d'écoulement de fluide entre eux ; et
une turbine rotative (32) logée dans la canalisation (35) entre l'orifice d'arrivée de fluide (36) et l'orifice de sortie de fluide (37),
**caractérisé en ce que** :
le rapport de la longueur axiale de la canalisation sur le diamètre intérieur moyen de la chambre de turbine est inférieur à 4,0.

30. Moteur à réaction hydraulique tel que revendiqué dans la revendication 29 dans lequel le rapport de la longueur axiale de la canalisation sur le diamètre intérieur moyen de la chambre de turbine est inférieur à 3,2.

31. Moteur à réaction hydraulique tel que revendiqué dans la revendication 29 ou la revendication 30 dans lequel le rapport de la longueur axiale de la canalisation sur le diamètre intérieur moyen de la chambre de turbine est essentiellement de 2,9.

32. Moteur à réaction hydraulique tel que revendiqué dans l'une quelconque des revendications 29 à 31 dans lequel la longueur axiale de la canalisation se trouve dans la plage de 0,3 m à 2,0 m, et le diamètre intérieur moyen de la chambre de turbine se trouve dans la plage de 0,1 m à 0,66 m.

33. Moteur à réaction hydraulique tel que revendiqué dans l'une quelconque des revendications 29 à 32 dans lequel la longueur axiale de la canalisation se trouve dans la plage de 0,7 m à 1,0 m et le diamètre intérieur moyen de la chambre de turbine se trouve dans la plage de 0,25 m à 0,33 m.

34. Moteur à réaction hydraulique tel que revendiqué dans l'une quelconque des revendications 29 à 33 dans lequel la longueur axiale de la canalisation est essentiellement de 0,85 m et le diamètre intérieur moyen de la chambre de turbine est essentiellement de 0,295 m.

35. Utilisation d'un moteur à réaction hydraulique tel que revendiqué dans l'une quelconque des revendications 1 à 20 ou des revendications 29 à 34 pour propulser un véhicule amphibie fonctionnant en mode marin.

36. Utilisation d'un moteur à réaction hydraulique tel que revendiqué dans l'une quelconque des revendications 1 à 20 ou des revendications 29 à 34 pour propulser un véhicule amphibie fonctionnant en mode marin jusqu'à une vitesse où une portance hydrodynamique suffisante est atteinte pour que le véhicule plane.

37. Utilisation d'un moteur à réaction hydraulique tel que revendiqué dans l'une quelconque des revendications 1 à 20 ou des revendications 29 à 34 pour propulser un véhicule amphibie ayant un coefficient de trainée dans l'eau supérieur à 0,27 à une vitesse de 8,7 noeuds (4,5 ms⁻¹) et un angle d'assiette entre dix et quinze degrés, le moteur à réaction hydraulique propulsant le véhicule lorsqu'il fonctionne en mode marin jusqu'à une vitesse où une portance hydrodynamique suffisante est atteinte pour que le véhicule plane.

38. Véhicule amphibie incorporant le moteur à réaction hydraulique tel que revendiqué dans l'une quelconque des revendications 1 à 20 ou des revendications 29 à 34.
